# EUROPÄISCHE PATENTSCHRIFT

(11) **EP 3 392 013 B1**
(45) Veröffentlichungstag und Bekanntmachung des Hinweises auf die Patenterteilung: **26.08.2020**
(21) Anmeldenummer: 17167454.2
(22) Anmeldetag: 21.04.2017
(51) Int. Cl.: B29C 44/44, B29C 31/04

(54) **INJEKTOR, VORDERTEIL FÜR EINEN INJEKTOR, VERFAHREN UND PRODUKTIONSANLAGE ZUR HERSTELLUNG VON FORMTEILEN AUS KUNSTSTOFF**
INJECTOR, FRONT PART FOR AN INJECTOR, METHOD AND PRODUCTION LINE FOR MANUFACTURING MOULDED PLASTIC PARTS
INJECTEUR, PARTIE AVANT D'UN INJECTEUR, PROCÉDÉ ET INSTALLATION DE PRODUCTION DE PIÈCES MOULÉES EN PLASTIQUE

(43) Veröffentlichungstag der Anmeldung: 24.10.2018
(73) Patentinhaber: Peter Kröner GmbH, 56412 Stahlhofen (DE)
(72) Erfinder: Kröner, Andreas, 56379 Winden (DE)
(74) Vertreter: Macliing, Trixia

(56) Entgegenhaltungen:
- CH-A- 398 953
- DE-A1-102009 024 278
- JP-A- H03 205 136
- JP-A- H09 174 587
- JP-A- S59 188 415
- JP-A- 2001 001 359
- JP-U- H0 568 633

## Beschreibung

Die Erfindung betrifft einen Injektor zum Befüllen einer Form mit Kunststoffteilchen gemäß dem Oberbegriff des Anspruchs 1. Die Erfindung betrifft ein Vorderteil für einen Injektor zum Befüllen einer Form mit Kunststoffteilchen gemäß dem Oberbegriff des Anspruchs 8. Die Erfindung betrifft außerdem ein Verfahren und eine Produktionsanlage zur Herstellung von Formteilen aus Kunststoff in einer Anzahl von Formen.

Im Herstellungsprozess von Formteilen aus aufschäumbaren Kunststoffen müssen bei Werkzeugwechsel, d.h. wenn der Schäumautomat von einem auf ein anderes Formteil umgerüstet werden soll, Injektoren, durch die Kunststoffteilchen mit Druckluft in eine Form, in der der Kunststoff aufgeschäumt wird, eingeleitet werden, von der Form demontiert und auf die nachfolgende Form montiert werden. Dieser Arbeitsschritt kostet Zeit und somit Geld. Da der Umbau in der Regel aufwendig ist, steht die Produktion für einen Zeitraum still, was die Teilkosten in die Höhe treibt. Alternativ können die Formen allesamt mit jeweils eigenen Injektoren bestückt werden, was die Rüstzeiten zwar minimiert, die Investitionskosten jedoch enorm in die Höhe treibt. Im Zuge der zunehmend bedarfssynchronen Produktion ("Just-in-Time-Produktion") spielen Rüstprozesse eine immer wichtigere Rolle.

Neben dem Umrüsten bei Werkzeugwechsel müssen im laufenden Produktionsprozess Injektoren unter ungünstigen Umständen im Inneren gereinigt werden, da es beim Füllvorgang zum Verstopfen und Verschweißen des Kunststoffes in den Injektoren selbst kommen kann. Auch dazu ist eine aufwendige Demontage der Injektoren von der Form notwendig.

Um das Umrüsten und Reinigen zu beschleunigen und die Kosten im Rahmen zu halten, können geteilte Injektoren eingesetzt werden. Diese bilden einen Kompromiss zwischen Investitions- und Rüstkosten. Die bislang auf dem Markt angebotenen Ausführungen lassen sich jedoch nur umständlich und mit Hilfe von zusätzlichem Werkzeug teilen.

Die Patentanmeldung DE 10 2009 024 278 A1 offenbart einen teilbaren Injektor, bei dem ein Rohr, beispielsweise durch eine Schraubverbindung mit einer Überwurfmutter, lösbar mit einem Anschlussstück verbunden ist. Nachteilig an eine Schraubverbindung ist, dass sie mit einem definierten Drehmoment angezogen werden muss, um einerseits sicherzustellen, dass die Verbindung durch den im Betrieb in dem Injektor herrschenden Überdruck, der typischerweise im Bereich von 6 bis 8 bar liegt, nicht gelöst wird, und andererseits Beschädigungen des Injektors durch ein zu starkes Anziehen zu verhindern. Dazu sind spezielles Werkzeug und geschultes Personal notwendig, wodurch die Montage und Demontage des Injektors teuer und aufwändig sind. Weiterhin ist es nicht möglich, die Ausrichtung des Anschlussstücks nach dem Verbinden zu korrigieren, beispielsweise um Zuleitungen eines Schäumautomaten für Druckluft oder Kunststoffteilchen besser an dem Anschlussstück anschließen zu können. Daher müssen Rohr und Anschlussstück gegebenenfalls im schwer zugänglichen Inneren des Schäumautomaten mehrmals verbunden und getrennt werden, um eine geeignete Ausrichtung zu finden, was wiederum die Rüstzeiten und -kosten in die Höhe treibt.

Die Patentanmeldung DE 10 2013 114 170 A1 beschreibt einen Injektor mit einem Vorderteil und einem Basisteil, die über eine Steckverbindung mit korrespondierenden Halbringnuten und diese durchgreifenden Steck- oder Passstiften verbunden sein können. Die Teile können ferner durch Gewindebolzen verbunden sein. Nachteilig daran ist, dass die Stifte nicht mit dem Injektor verbunden sind, sodass sie bei der Montage oder Demontage leicht verloren gehen können. Ferner müssen die Teile mit einer geringen Toleranz gefertigt sein, damit eine Steckverbindung die notwendige Dichtheit und Stabilität gegenüber dem im Betrieb in dem Injektor herrschenden Überdruck sicherstellen kann. Daher ist die Herstellung des beschriebenen Injektors aufwändig und teuer. Weiterhin ist es auch hier nicht möglich, die Ausrichtung des Basisteils nach dem Verbinden zu korrigieren.

Die Dokumente JP H03 205136 A, JP 2001 001359 A und JP H05 68633 U offenbaren auch solche Injektoren.

Daraus ergibt sich die technische Aufgabe, möglichst einfach und kostengünstig herzustellende Vorrichtungen und möglichst einfach durchzuführende Verfahren zu schaffen, die eine zuverlässige Herstellung von Formteilen aus Kunststoff zeit- und kosteneffizienter ermöglichen als Lösungen aus dem Stand der Technik.

Diese Aufgabe wird durch einen Injektor nach Anspruch 1, ein Vorderteil für einen Injektor gemäß Anspruch 8, ein Verfahren gemäß Anspruch 11 und eine Produktionsanlage gemäß Anspruch 14 gelöst. Vorteilhafte Ausführungen ergeben sich aus den davon abhängigen Ansprüchen.

Ein erfindungsgemäßer Injektor zum Befüllen einer Form mit Kunststoffteilchen umfasst ein insbesondere rohrförmiges und/oder erfindungsgemäßes, Vorderteil mit einem Mündungsende zum Anschluss an die Form und ein Antriebsteil zur Anordnung an einem dem Mündungsende gegenüberliegenden Verbindungsende des Vorderteils. Das Antriebsteil umfasst einen in das Vorderteil einführbaren Kolben sowie einen Antrieb zur Bewegung des Kolbens entlang einer Längsachse des Vorderteils. Der Kolben kann von dem Antrieb in eine Befüllposition und eine Verschlussposition bewegt werden. In der Verschlussposition verschließt der Kolben eine Einfüllöffnung der Form, an der der Injektor angeschlossen ist, beispielsweise um ein Austreten von Kunststoff während eines Aufschäumens des Kunststoffs zu verhindern. In der Befüllposition ist der Kolben von der Einfüllöffnung zurückgezogen und erlaubt so ein Einströmen von Kunststoffteilchen und/oder Druckluft durch den Injektor und die Einfüllöffnung in die Form. Die Kunststoffteilchen können beispielsweise als Pulver oder Granulat vorliegen. Die Kunststoffteilchen und/oder jedes einzelne Kunststoffteilchen können insbesondere aus genau einem Kunststoff oder aus einer Mischung mehrerer Kunststoffe bestehen. Ein solcher Kunststoff ist bevorzugt aufschäumbar, wie beispielsweise expandierbares Polystyrol, Polypropylen oder Polyethylen.

Der Injektor umfasst eine Verbindungsvorrichtung zur lösbaren Fixierung des Antriebsteils in vorzugsweise zumindest radialer und axialer Richtung bezüglich der Längsachse an dem Vorderteil, wobei das Antriebsteil um die Längsachse drehbar an dem Vorderteil gelagert sein kann. Durch eine Fixierung in radialer und axialer Richtung wird sichergestellt, dass die Teile im Betrieb des Injektors zuverlässig aneinander gehalten werden, so dass die Gefahr von Unfällen, Fehlfunktionen und/oder Beschädigungen durch ein sich lösendes Antriebsteil und/oder unkontrolliert austretende Druckluft und/oder Kunststoffteilchen minimiert wird. Eine radiale Fixierung kann beispielsweise auf einfache Weise erreicht werden, indem das Vorderteil, die Verbindungsvorrichtung und das Antriebsteil in radialer Richtung formschlüssig verbunden, insbesondere ineinander gesteckt, sind. Durch eine um die Längsachse drehbare Lagerung ist es möglich, die Ausrichtung des Antriebsteils in einem mit dem Vorderteil verbundenen Zustand durch eine Drehung um die Längsachse zu justieren, beispielsweise um Zuleitungen für Druckluft und/oder Kunststoffteilchen in einem Schäumautomaten einfacher an das Antriebsteil anschließen zu können.

Die Verbindungsvorrichtung kann an dem Antriebsteil befestigt sein. Dadurch kann die Verbindungsvorrichtung zusammen mit dem Antriebsteil auf einfache Weise von einem Vorderteil an ein anderes Vorderteil überführt werden. Weiterhin kann das Vorderteil besonders einfach aufgebaut sein. Das ist insbesondere dann von Vorteil, wenn das Vorderteil bei einem Umrüstvorgang zur Zeitersparnis an der Form verbleiben soll. In diesem Fall können durch ein einfach aufgebautes Vorderteil erhebliche Kosten eingespart werden. Es ist jedoch auch denkbar, die Verbindungsvorrichtung nicht an den Antriebsteil sondern an dem Vorderteil zu befestigen.

Die Verbindungsvorrichtung kann beispielsweise durch eine Schraub- oder Klemmverbindung oder eine stoffliche Verbindung an dem Antriebsteil befestigt sein. Insbesondere kann das Antriebsteil ein Innengewinde aufweisen, in das ein korrespondierendes Außengewinde der Verbindungsvorrichtung eingeschraubt und vorteilhafterweise mit Gewindesicherungsklebstoff gesichert ist. Selbstverständlich ist auch die umgekehrte Verteilung von Innengewinde und Außengewinde denkbar. Eine Schraubverbindung hat den Vorteil, dass dadurch unterschiedlich ausgelegte Verbindungsvorrichtungen und/oder Antriebsteile modular miteinander kombiniert werden und sicher aneinander befestigt werden können.

Die Verbindungsvorrichtung kann eine Anzahl von Konnektoren zur Fixierung der Verbindungsvorrichtung an dem Antriebsteil oder an dem Vorderteil in axialer Richtung bezüglich der Längsachse umfassen. Die Konnektoren können zum Beispiel Federelemente umfassen, die, insbesondere wie bei einer Steckschnalle oder einem Steckschloss, federnd in Federelementaufnahmen eingreifen, um in axialer Richtung eine kraftschlüssige Verbindung der Verbindungsvorrichtung mit dem Vorderteil oder dem Antriebsteil herzustellen.

Die Konnektoren können dazu ausgelegt sind, mit einer Anzahl von Gegenkonnektoren an dem Vorderteil oder dem Antriebsteil gegenüber einer Bewegung entlang der Längsachse formschlüssig zusammenzuwirken. Vorteilhafterweise weisen Konnektoren und Gegenkonnektoren in einer die Längsachse umfassenden Schnittebene komplementäre Formen auf. Dadurch können Sie in axialer Richtung besonders zuverlässig formschlüssig zusammenwirken. Beispielsweise können die Konnektoren als radiale Vorsprünge und die Gegenkonnektoren als radiale Vertiefungen oder umgekehrt ausgebildet sein. Vorteilhafterweise ist eine radiale Vertiefung als um die Längsachse umlaufende Nut ausgestaltet, da somit in die Nut eingreifende Konnektoren oder Gegenkonnektoren bezüglich einer Rotation um die Längsachse beweglich und gleichzeitig in axialer und radialer Richtung fixiert sein können. Weiterhin kann durch eine umlaufend gleichmäßige Fixierung eine besonders sichere Befestigung gegenüber dem im Betrieb des Injektors in dessen Innerem herrschenden Überdruck erreicht werden.

Besonders vorteilhaft sind die in die Nut eingreifenden Konnektoren oder Gegenkonnektoren als Kugeln oder Walzen ausgebildet, sodass sie mit der Nut ein Kugel- oder Wälzlager bilden, das eine besonders leichtgängige und verschleißarme Rotation erlaubt. Eine Ausgestaltung als Kugeln bietet den zusätzlichen Vorteil, dass die Kugeln so angeordnet sein können, dass sie auch beim Zusammenstecken oder Auseinanderziehen Vorderteil und Antriebsteil aneinander führen und somit Reibung und Verschleiß reduzieren.

Vorteilhafterweise können die Konnektoren und/oder die Gegenkonnektoren aus einem verschleißbeständigen Material, beispielsweise rostfreiem Stahl, Messing oder hochfestem Aluminium, hergestellt sein und/oder eine verschleißbeständige Beschichtung, beispielsweise aus Aluminiumnitrid, Wolframcarbid oder amorphem Kohlenstoff, aufweisen. Dadurch wird sichergestellt, dass die Konnektoren und/oder Gegenkonnektoren den Belastungen bei Montage und Demontage sowie durch den Überdruck im Betrieb des Injektors standhalten, sodass eine lange Lebensdauer und ein sicherer Betrieb des Injektors gewährleistet sind.

Vorteilhafterweise können die Konnektoren an der Verbindungsvorrichtung und/oder die Gegenkonnektoren an dem Vorderteil und/oder dem Antriebsteil radial zur Längsachse beweglich gelagert sein. Dadurch können die Konnektoren und/oder Gegenkonnektoren von einer Betriebsposition in eine Montageposition radial verschoben werden, wobei sie in der Betriebsposition in axialer Richtung formschlüssig zusammenwirken, so dass die Verbindungsvorrichtung an dem Vorderteil und dem Antriebsteil in axialer Richtung fixiert ist. In der Montageposition wirken die Konnektoren und Gegenkonnektoren nicht in axialer Richtung formschlüssig zusammen, so dass das Antriebsteil in axialer Richtung von dem Vorderteil abgezogen werden kann.

Vorteilhafterweise ist die Verbindungsvorrichtung an dem Vorderteil oder dem Antriebsteil radial geführt, so dass die Teile ohne zu verkanten zusammengeschoben oder auseinandergezogen werden können.

Die Verbindungsvorrichtung kann ein von einer Betriebsposition in eine Montageposition verschiebbares Rahmenelement umfassen, wobei das Rahmenelement die Konnektoren und/oder Gegenkonnektoren in der Betriebsposition in einer in axialer Richtung formschlüssig zusammenwirkenden Position fixiert und in der Montageposition für eine Bewegung radial zur Längsachse frei gibt. Durch das Rahmenelement können die Konnektoren und/oder Gegenkonnektoren zum einen in ihrer Betriebsposition fixiert werden, um einen sicheren Betrieb des Injektors zu gewährleisten, und zum anderen freigegeben werden, um das Antriebsteil auf einfache Weise von dem Vorderteil zu trennen. Das Rahmenelement kann die Verbindungsvorrichtung beispielsweise ringförmig umschließen. Es kann an seiner Innenseite so ausgestaltet sein, dass es in der Betriebsposition die Konnektoren und/oder Gegenkonnektoren in radialer Richtung formschlüssig fixiert und in der Montageposition eine radiale Bewegung der Konnektoren und/oder Gegenkonnektoren, beispielsweise in eine Ausnehmung des Rahmenelements, erlaubt.

Vorteilhafterweise ist das Rahmenelement entlang der Längsachse verschiebbar. Dadurch kann in einem einheitlichen Bewegungsablauf das Rahmenelement aus der Betriebsposition in Montageposition verschoben und das Antriebsteil von dem Vorderteil in zur Längsachse axialer Richtung abgezogen werden. Analog kann in einem weiteren einheitlichen Bewegungsablauf das Antriebsteil auf das Vorderteil aufgesteckt und das Rahmenelement aus der Montageposition in die Betriebsposition verschoben werden. Ferner verursacht ein Überdruck im Inneren des Injektors während dessen Betrieb im Bereich der Verbindungsvorrichtung hautsächlich radial zur Längsachse nach außen wirkende Kräfte. Daher kann das Rahmenelement nicht durch den Überdruck entlang der Längsachse aus der Betriebsposition in die Montageposition verschoben werden, wodurch Druckluft unkontrolliert austreten und/oder das Antriebsteil unkontrolliert von dem Vorderteil getrennt werden könnte.

Vorteilhafterweise können das Rahmenelement, die Konnektoren und/oder die Gegenkonnektoren so ausgelegt sein, dass sie beim Erreichen ihrer Betriebsposition hörbar und/oder spürbar einrasten. Dadurch kann auf einfachste Weise überprüft werden, dass die Betriebsposition erreicht und somit ein sicherer Betrieb des Injektors möglich ist. Alternativ oder ergänzend kann die Verbindungsvorrichtung ein Anzeigeelement umfassen, das das Erreichen der Betriebsposition anzeigt. Das Anzeigeelement kann beispielsweise eine farbliche Markierung umfassen, die von dem Rahmenelement bei Erreichen der Betriebsposition verdeckt oder freigelegt wird.

Insbesondere kann ein Federelement das Rahmenelement in der Betriebsposition halten. Im einfachsten Fall kann das Federelement beispielsweise als Spiralfeder ausgeführt sein. Vorteilhafterweise ist eine Kraft des Federelements größer gewählt, als eine Kraft die, insbesondere im Betrieb des Injektors, beispielsweise bei einer unbeabsichtigten Berührung des Injektors durch einen Nutzer und/oder einen Schäumautomaten, für eine Verschiebung des Rahmenelements aus der Betriebsposition heraus zu erwarten ist, wobei insbesondere eine Sicherheitsmarge berücksichtigt sein kann. Dadurch wird sichergestellt, dass sich das Rahmenelement nicht während des Betriebs des Injektors in die Montageposition verschiebt, wodurch das Antriebsteil unkontrolliert von dem Vorderteil getrennt werden könnte.

Als Schutz vor einem zu hohen Druck im Inneren des Injektors kann der Injektor ein Überdrucksicherung, beispielsweise ein Überdruckventil, eine Überdruckklappe oder eine Sollbruchstelle umfassen.

Die Verbindungseinrichtung kann ein Bedienelement, bevorzugt einen Handgriff und/oder eine Grifffläche, zum Lösen der Fixierung der Verbindungseinrichtung an dem Antriebsteil oder an dem Vorderteil umfassen. In einer besonders einfachen Ausgestaltung kann eine Außenfläche eines Rahmenelements als Grifffläche ausgebildet sein.

Vorteilhafterweise ist das Bedienelement dazu ausgelegt, die Fixierung durch Überwinden einer Kraft eines Federelements zu lösen. Beispielsweise kann zum Lösen ein Rahmenelement gegen eine Federkraft einer Feder verschoben werden. Dadurch ist eine besonders einfache, insbesondere werkzeuglose, Montage und Demontage möglich, da keine weiteren Sicherungsmittel, wie zum Beispiel Muttern oder Schrauben, gelöst oder befestigt werden müssen. Um ein versehentliches Lösen zu vermeiden, kann das Bedienelement ein Verriegelungselement, beispielsweise einen Schalter, umfassen, der betätigt werden muss, um das Rahmenelement aus der Betriebsposition heraus zu verschieben.

Das Bedienelement ist vorteilhafterweise an dem Injektor befestigt, beispielsweise indem es den Injektor, insbesondere als Rahmenelement, ringförmig umschließt. Alternativ oder ergänzend kann das Bedienelement, beispielsweise mit einem Draht, an dem Injektor angebunden sein. Durch die Befestigung wird verhindert, dass das Bedienelement bei der Montage oder Demontage herunter fällt oder, z.B. in einem schwer zugänglichen Teil des Schäumautomaten, verlorengeht. Dadurch ist eine schnellere und einfachere Montage und Demontage möglich.

Der Injektor kann ein Innenrohr zur Anordnung in dem Vorderteil umfassen. Durch das Innenrohr können auf einfache Weise zwei voneinander getrennte Strömungskanäle für Kunststoffteilchen und Druckluft realisiert werden. So können beispielsweise die Kunststoffteilchen im Inneren des Innenrohrs und die Druckluft im Zwischenraum zwischen dem Innenrohr und einem Mantel des Vorderteils getrennt voneinander geführt werden. Für einen einfachen Aufbau des Injektor es ist das Innenohr vorteilhafterweise koaxial in dem Vorderteil angeordnet.

Das Innenrohr kann an dem Antriebsteil, insbesondere durch eine Schraubverbindung, befestigt sein. Ist das Innenrohr an dem Antriebsteil befestigt, kann das Vorderteil besonders einfach aufgebaut sein, und das Innenrohr kann gemeinsam mit dem Antriebsteil von dem Vorderteil abgenommen werden, beispielsweise um es zu reinigen oder zu warten.

Das Innenrohr kann an seinem dem Mündungsende zugewandten Ende eine Fase aufweisen. Dadurch kann das Innenrohr besonders einfach, insbesondere ohne zu verkanten, in das Vorderteil eingeführt werden.

Das Innenrohr kann an seinem dem Mündungsende zugewandten Ende eine Düse mit zur Längsachse geneigten Düsenbohrungen zur Führung von Druckluft an das Mündungsende aufweisen. Durch die Düse können die Druckluft und somit auch die Kunststoffteilchen unter einem definierten Winkel in die Form eingebracht werden, um diese gleichmäßig mit Kunststoff auszufüllen. Dadurch können Formteile von besonders hoher Qualität hergestellt werden.

Der Antrieb I umfasst eine entlang der Längsachse verstellbar, an dem Kolben befestigte I Z Kolbenstange. I Die Kolbenstange kann beispielsweise in den Kolben eingeschraubt und insbesondere durch eine Mutter gesichert sein. Durch eine Verstellbarkeit entlang der Längsachse kann die Länge des Systems aus Kolben und Kolben und Kolbenstange so eingestellt werden, dass der Kolben in seiner Verschlussposition mit dem Mündungsende bündig abschließt. Dadurch wird sichergestellt, dass beim Aufschäumen der Kunststoffteilchen an der von dem Kolben verschlossenen Einfüllöffnung der Form kein Abdruck des Kolbens entsteht. Ferner ist bei der Herstellung des Antriebsteils eine höhere Toleranz bezüglich der Länge und/oder Positionierung von Kolben und/oder Kolbenstange möglich, da Abweichungen von einer Soll-Länge und/oder Soll-Position durch die Verstellbarkeit kompensiert werden können. Dadurch sinken die Herstellungskosten des Antriebsteils. Außerdem kann die Länge des Systems aus Kolben und Kolbenstange für die Verwendung mit unterschiedlichen Vorderteilen angepasst werden.

Der Antrieb kann einen an dem von dem Kolben abgewandten Ende der Kolbenstange befestigten Antriebskolben, der in einem Pneumatikzylinder entlang der Längsachse verschiebbar angeordnet ist, umfassen. Dadurch kann der Injektor rein pneumatisch betrieben werden, so dass neben Zuleitungen für Druckluft und Kunststoffteilchen keine weiteren Versorgungs- oder Steuerungsleitungen an dem Injektor angebracht sein müssen. Somit sind ein besonders einfacher Aufbau des Injektors und eine einfache Montage und Demontage möglich.

Ein erfindungsgemäßes, insbesondere rohrförmiges, Vorderteil für einen, insbesondere erfindungsgemäßen, Injektor zum Befüllen einer Form mit Kunststoffteilchen umfasst ein Mündungsende zum Anschluss des Vorderteils an die Form und ein dem Mündungsende gegenüberliegendes Verbindungsende zur Verbindung des Vorderteils mit einem Antriebsteil des Injektors. Im einfachsten Fall ist das Vorderteil im Wesentlichen zylinderförmig, sodass es einfach und kostengünstig hergestellt werden kann.

Zum Anschluss an die Form kann das Vorderteil an seinem Mündungsende zum Beispiel ein Gewinde und/oder ein Klemmmittel wie einen Befestigungsflansch umfassen. Vorteilhafterweise umfasst das Vorderteil an seinem Mündungsende ein Außengewinde, da das Vorderteil damit mit einer einstellbaren Einbautiefe stabil mit der Form verbunden werden kann, ohne dass eine Strömung von Druckluft und/oder Kunststoffteilchen im Inneren des Vorderteils gestört wird. Eine einstellbare Einbautiefe ist deshalb vorteilhaft, weil das Vorderteil mit einer Innenseite der Form bündig abschließen muss, um ein Formteil mit einer gleichmäßigen Oberfläche zu erzeugen.

Das Vorderteil kann ein Einstellelement zum Einstellen einer Länge des Vorderteils entlang einer Längsachse des Vorderteils umfassen. Durch das Einstellelement kann die Länge des Vorderteils so eingestellt werden, dass ein in das Vorderteil zum Verschließen einer Einfüllöffnung der Form eingeführten Kolben des Injektors mit dem Mündungsende bündig abschließt. Dadurch wird sichergestellt, dass beim Aufschäumen der Kunststoffteilchen an der von dem Kolben verschlossenen Einfüllöffnung der Form kein Abdruck des Kolbens entsteht. Ferner ist bei der Herstellung des Vorderteils eine höhere Toleranz bezüglich der Länge des Vorderteils möglich, da Abweichungen von einer Soll-Länge durch das Einstellelement kompensiert werden können. Dadurch sinken die Herstellungskosten des Vorderteils. Außerdem kann die Länge des Vorderteils für die Verwendung mit unterschiedlichen Antriebsteilen angepasst werden.

Das Einstellelement kann einen an dem Verbindungsende entlang der Längsachse verstellbar befestigten Adapter zur Verbindung des Vorderteils mit dem Antriebsteil und/oder einer Verbindungsvorrichtung umfassen. Das Vorderteil kann insbesondere ein Gewinde aufweisen, auf das der Adapter und/oder eine Ringmutter zur Sicherung des Adapters aufgeschraubt sind. Der Adapter kann beispielsweise als das Vorderteil umschließende Hülse ausgestaltet sein, die insbesondere eine Anzahl von Gegenkonnektoren zur entlang der Längsachse formschlüssigen Verbindung mit Konnektoren der Verbindungsvorrichtung aufweisen kann. Besonders vorteilhaft kann ein Gegenkonnektor als umlaufende Nut ausgebildet sein, in der die Konnektoren entlang der Längsachse fixiert und um die Längsachse drehbar gelagert sein können.

Das Vorderteil kann eine Montagehilfe zur einfachen und sicheren Befestigung des Antriebsteils an dem Vorderteil umfassen. Die Montagehilfe kann ein an dem Mündungsende angeordnetes Mundstück umfassen. Das Mundstück umfasst eine, bevorzugt zur Längsachse koaxiale, Bohrung, die zu einem dem Mündungsende zugewandten Ende eines in das Vorderteil einzuführenden Innenrohrs komplementär geformt ist und sich bevorzugt zumindest abschnittsweise in einer Einführrichtung des Innenrohrs entlang der Längsachse konisch verjüngt. Das Mundstück kann lösbar an dem Vorderteil befestigt, beispielsweise angeschraubt, sein. Dadurch können unterschiedliche Mundstücke, die sich zur Verwendung mit unterschiedlichen Formen, beispielsweise in ihrer Länge, unterscheiden, mit dem Vorderteil kombiniert werden. Das Mundstück kann einen Code, beispielsweise einen Farb-, Zahlen-, Buchstaben-, Bar- und/oder QR-Code, aufweisen, aus dem hervorgeht, zur Verwendung mit welcher Form sie vorgesehen sind. Das Mundstück kann auch fest, beispielsweise stoffschlüssig, mit dem Vorderteil verbunden und insbesondere einstückig mit dem Vorderteil ausgebildet sein. Dadurch kann auf einfache Weise eine besonders hohe mechanische Stabilität des Vorderteils erreicht werden.

Die Montagehilfe kann einem Anzeigemittel zur Anzeige eines bündigen Abschlusses eines in das Vorderteil eingeführten Kolbens des Antriebsteils mit dem Mündungsende umfassen. Mit Hilfe des Anzeigemittels kann überprüft werden, dass eine verstellbare Länge des Vorderteils und/oder eine verstellbare Länge und/oder Position des Kolbens für einen bündigen Abschluss korrekt justiert sind. Dadurch wird sichergestellt, dass beim Aufschäumen des Kunststoffs in der Form kein Abdruck des Kolbens auf dem erzeugten Formteil entsteht. Das Anzeigemittel kann beispielsweise einen an dem Mündungsende angebrachten Sensor, beispielsweise einen Ultraschallsensor, umfassen, der die Anwesenheit des Kolbens detektiert und daraufhin ein Signal ausgibt. Das Signal kann von einem, beispielsweise außen an dem Vorderteil angebrachten, Darstellungsmittel, beispielsweise zumindest einer Leuchtdiode, dargestellt werden. Alternativ oder ergänzend können auch die Signale mehrerer Anzeigemittel unterschiedlicher Vorderteile von einem zentralen Darstellungsmittel dargestellt werden.

Das erfindungsgemäße Verfahren zur Herstellung von Formteilen aus Kunststoff in einer Anzahl von Formen umfasst zumindest folgende Schritte:
a. Bestücken der Formen mit jeweils einer Anzahl von Vorderteilen von Injektoren zum Befüllen der Formen mit Kunststoffteilchen und
b. Befestigen von jeweils einem Antriebsteil zumindest an den an einer Form angebrachten Vorderteilen, wobei jeweils ein Antriebsteil an einem Vorderteil radial und axial zu einer Längsachse des Vorderteils fixiert und um die Längsachse drehbar ist, und
c. Ausrichten der Antriebsteile durch Rotation um die Längsachse nach dem Befestigen der Antriebsteile.

Die in dem Verfahren verwendeten Vorderteile und/oder Injektoren können insbesondere erfindungsgemäß ausgestaltet sein.

Durch das Ausrichten der Antriebsteile nach dem Befestigen derselben können die Antriebsteile zunächst, beispielsweise außerhalb eines Schäumautomaten, sicher an den Vorderteilen fixiert werden, so dass keine Gefahr eines unbeabsichtigten Lösens im Betrieb der Injektoren besteht. Danach können die Antriebsteile so ausgerichtet werden, dass Zuleitungen für Kunststoffteilchen und/oder Druckluft einfach daran angeschlossen werden können, ohne durch ein Lösen der Befestigung an den Vorderteilen den Aufwand zu erhöhen und/oder die Stabilität der Befestigung zu gefährden. Das Ausrichten kann insbesondere selbsttätig erfolgen, beispielsweise durch eine von zumindest einer Zuleitung auf das Antriebsteil ausgeübte Kraft.

Das Bestücken kann an einer größeren Anzahl von Formen erfolgt als das Befestigen. Insbesondere wenn die Vorderteile im Verhältnis zu den Antriebsteilen kostengünstig sind, ist es vorteilhaft, eine Mehrzahl von Formen mit Vorderteilen zu bestücken und die Antriebsteile daran nur dann zu befestigen, wenn sie benötigt werden. So muss das Bestücken, bei dem die Vorderteile in aufwändiger Weise in die Formen eingepasst werden müssen, weniger häufig, insbesondere nur genau einmal pro Form, erfolgen, wodurch das Herstellungsverfahren schneller und kostengünstiger wird. Das Befestigen der Antriebsteile kann im Sinne der vorliegenden Erfindung schneller und einfacher erfolgen als das Bestücken der Form mit Vorderteilen.

Das Verfahren kann ein Lösen der Antriebsteile zumindest von den an einer Form angebrachten Vorderteilen und insbesondere ein weiteres Befestigen der gelösten Antriebsteile an den an einer weiteren Form angebrachten Vorderteilen umfassen. Auf diese Weise kann mit einer geringen Anzahl von Antriebsteilen eine große Anzahl von Formen verwendet werden, wodurch die Investitionskosten gering gehalten werden.

Das Befestigen, das weitere Befestigen und/oder das Lösen können mit einem von Hand bedienbaren Bedienelement einer Verbindungsvorrichtung des jeweiligen Injektors, dessen Antriebsteil befestigt oder gelöst wird, von Hand erfolgen. Dadurch wird kein zusätzliches Werkzeug benötigt, das insbesondere in einem engen Raum zwischen einer Vielzahl von an einer Form angebrachten Injektoren schwierig zu benutzen sein kann. Vorteilhafterweise ist das Bedienelement an dem Injektor befestigt, so dass es nicht herunterfallen und/oder verloren gehen kann.

Das Verfahren kann zumindest einen der folgenden Schritte umfassen:
a. Anschließen von einer Anzahl von Zuleitungen für Druckluft und/oder Kunststoffpartikel an den Antriebsteilen;
b. Befüllen zumindest einer der Formen durch die daran befestigten, aus jeweils einem Vorderteil und einem Antriebsteil gebildeten Injektoren mit Kunststoffteilchen;
c. Verschließen einer Anzahl von Einfüllöffnungen der befüllten Form mit jeweils einem Kolben eines Injektors;
d. Aufschäumen der in eine Form gefüllten Kunststoffteilchen;
e. Auswerfen des von den aufgeschäumten Kunststoffteilchen gebildeten Formteils aus der Form durch eine Anzahl von Kolben an der Form befestigter Injektoren und/oder eine Anzahl von Auswerferstangen und/oder
f. Warten einer Anzahl voneinander gelöster Vorderteile und/oder Antriebsteile.

Das Auswerfen durch eine Anzahl von Kolben kann beispielsweise so geschehen, wie es in der Druckschrift DE 2 141 373 A, deren Inhalt hiermit durch Bezugnahme aufgenommen wird, beschrieben ist.

Indem die Vorderteilen und/oder Antriebsteile in einem voneinander gelösten Zustand gewartet werden, sind zu wartende Teile, die beispielsweise gereinigt oder ausgetauscht werden müssen, leichter zugänglich als in einem aneinander befestigten Zustand. Für das Warten ist es besonders vorteilhaft, wenn Verschleißteile, wie beispielsweise Dichtungen an einem Vorderteil und/oder Antriebsteil so angeordnet sind, dass sie im voneinander gelösten Zustand leicht zugänglich sind.

Eine erfindungsgemäße Produktionsanlage zur Herstellung von Formteilen aus Kunststoff in einer Anzahl von Formen umfasst zumindest einen Schäumautomaten.

Die Produktionsanlage kann zumindest eine Rüststation zum Befestigen von Antriebsteilen an Vorderteilen zur Bildung von erfindungsgemäßen Injektoren und/oder zum Lösen der Antriebsteile von den Vorderteilen umfassen. Die Vorderteile können an zumindest einer der Formen angebracht sein. Durch die Rüststation können Antriebsteile an unterschiedlichen Formen befestigt und verwendet werden, sodass nur wenige Antriebsteile benötigt werden. Bevorzugt ist die Rüststation zumindest teilautomatisiert und/oder mit zumindest einem Überprüfungsmittel zur Überprüfung der korrekten Befestigung der Antriebsteile an den Vorderteilen ausgestattet. Das Überprüfungsmittel kann beispielsweise einen akustischen Sensor umfassen, der ein Einrasten eines Antriebsteils an einem Vorderteil detektiert. Eine korrekte Befestigung kann von dem Überprüfungsmittel ferner durch ein Anzeigemittel angezeigt und/oder in einem Datenspeicher protokolliert und ggf. von einem vorzugsweise computergestützten System kontrolliert und dann beispielsweise zu Produktion freigegeben werden.

Die Produktionsanlage kann eine Wartungsstation zur, insbesondere zumindest teilautomatischen, Wartung der Formen und/oder Injektoren umfassen. Die Wartung kann beispielsweise eine Reinigung und/oder eine Kontrolle und/oder ein Austauschen von Verschleißteilen umfassen. Die Wartungsstation kann insbesondere mit der Rüststation integriert ausgestaltet sein, sodass Umrüstung und Wartung zeitsparend in einen Arbeitsgang ausgeführt werden können.

Die Produktionsanlage kann zumindest eine Bestückungsstation zum Bestücken der Formen mit den Vorderteilen umfassen. Bevorzugt ist die Bestückungsstation zumindest teilautomatisiert und/oder mit zumindest einem Überprüfungsmittel zur Überprüfung der korrekten Anordnung der Vorderteile an einer Form ausgestattet. Das Überprüfungsmittel kann beispielsweise Kamerasystem umfassen, das eine Einbautiefe der Vorderteile in der Form misst und mit einem entsprechenden Soll-Wert vergleicht. Eine korrekte Anordnung kann von dem Überprüfungsmittel ferner durch ein Anzeigemittel angezeigt und/oder in einem Datenspeicher protokolliert werden.

Die Produktionsanlage umfasst zumindest ein, vorzugsweise motorisiertes und/oder zumindest teilautomatisiertes, Transportsystem zum Transportieren der Formen zwischen dem Schäumautomaten, der Rüststation, der Wartungsstation und/oder der I Bestückungsstation. Durch ein Transportsystem kann die Produktionsanlage besonders zeit- und kosteneffizient zur Verwendung unterschiedlicher Formen umgerüstet werden. Das Transportsystem kann beispielsweise zumindest einen Transportroboter und/oder ein Förderband umfassen.

Die Ausgestaltungen der Erfindung zeichnen sich insbesondere durch folgende Vorteile aus:
Es ist kein Werkzeug nötig um Antriebsteil und Vorderteil miteinander zu verbinden.

Beim Rüsten der Formen sowie während des Produktionsprozesses ist es erforderlich, die Injektoren zu montieren und zu demontieren (z.B. um Dichtungen zu wechseln oder Materialstaus zu beseitigen). Der Montageaufwand ist erfindungsgemäß sehr gering, sodass Wartungsarbeiten deutlich einfacher und schneller und somit wirtschaftlicher durchgeführt werden können.

Auch bei beengten Platzverhältnissen kann das Antriebsteil schnell und ohne zusätzliche Hilfsmittel montiert und demontiert werden. Dies ist insbesondere dann von Vorteil, wenn mehrere Injektoren und andere Komponenten wie Auswerferstangen, Sensoren etc. als Hindernisse auf engem Raum nebeneinander an einer Form angebracht sind, da kein Werkzeug wie Schraubenschlüssel o.ä. benötigt wird.

Im eingebauten Zustand kann das Antriebsteil um 360° gedreht werden, was die Ausrichtung des Injektors erleichtert, da eventuelle Störelemente ansonsten ein Anschließen, beispielsweise des Materialschlauches, verhindern können.

Der erfindungsgemäße Injektor enthält keine losen Teile, die beim Montage- oder Demontagevorgang herunterfallen und/oder verloren gehen können (wie beispielsweise Schrauben oder Werkzeuge).

Der Montagevorgang ist leicht wiederholbar. Es sind keine Schraubenanzugsmomente einzuhalten, da keine Schrauben zum Einsatz kommen. Daher kann auch ein Laie nach Unterweisung Vorderteil und Antriebsteil miteinander verbinden, ohne dass es zu Schäden an der Form oder dem Injektor selbst kommen kann.

Durch ein deutliches und hörbares Einrasten des Rahmenelements in seiner Betriebsposition ist der Montagevorgang sicher abgeschlossen. Eine mangelhafte Montage wird damit nahezu ausgeschlossen.

Nachfolgend wird die Erfindung anhand von Ausführungsbeispielen beschrieben, die anhand der Figuren näher erläutert werden.

Es zeigen:
- Fig. 1: eine Längsschnittzeichnung eines in Vorderteil und Antriebsteil zerlegten erfindungsgemäßen Injektors;
- Fig. 2: eine Vergrößerung des mit Z markierten Teilbereichs von Fig. 1;
- Fig. 3: eine perspektivische Zeichnung des Injektors aus Fig. 1;
- Fig. 4: eine Längsschnittzeichnung des Injektors aus Fig. 1 mit einem Kolben in einer Befüllposition;
- Fig. 5: eine Längsschnittzeichnung des Injektors aus Fig. 1 mit einem Kolben in einer Verschlussposition;
- Fig. 6: eine perspektivische Zeichnung des Injektors aus Fig. 4;
- Fig. 7: eine Vergrößerung des mit X markierten Teilbereichs von Fig. 6;
- Fig. 8: eine schematische Darstellung einer mit erfindungsgemäßen Vorderteilen bestückten Form;
- Fig. 9: eine schematische Darstellung der Form aus Fig. 8 mit erfindungsgemäßen Injektoren;
- Fig. 10: eine schematische Darstellung eines erfindungsgemäßen Verfahrens und
- Fig. 11: eine schematische Darstellung einer erfindungsgemäßen Produktionsanlage.

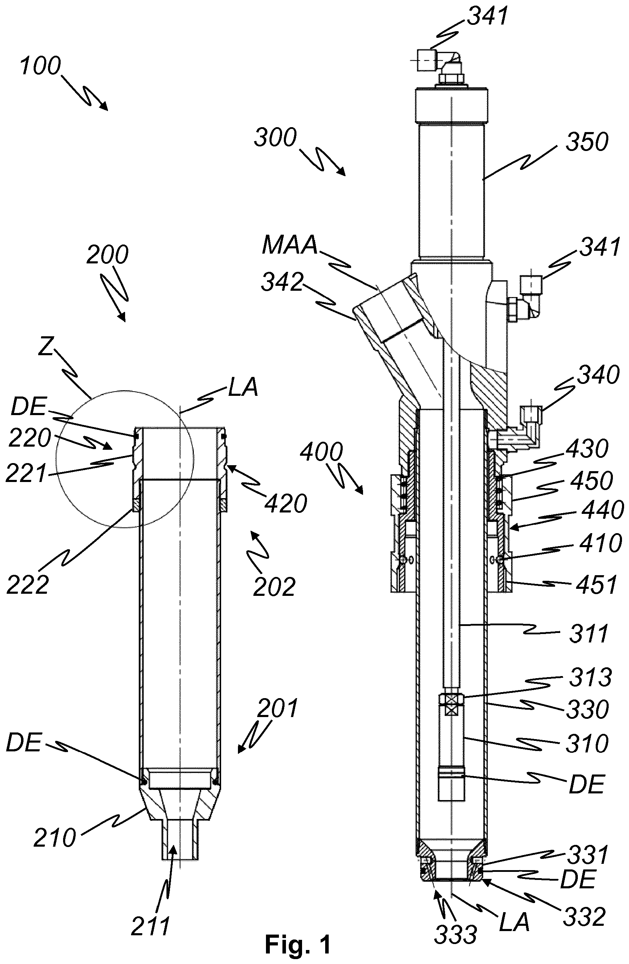

Figur 1 zeigt eine Längsschnittzeichnung eines in ein, insbesondere erfindungsgemäßes, Vorderteil 200 und ein Antriebsteil 300 zerlegten erfindungsgemäßen Injektors 100. Das dargestellte rohrförmige Vorderteil 200 besteht aus einem Mundstück 210 mit einem Dichtelement DE, beispielsweise einem O-Ring, an einem Mündungsende 201 des Vorderteils 200 sowie einem Einstellelement 220 an einem dem Mündungsende 201 gegenüberliegenden Verbindungsende 202. Das dargestellte Einstellelement 220 umfasst eine Ringmutter 222 und einen Adapter 221 mit einem weiteren Dichtelement DE in Form eines O-Rings. Das dargestellte Vorderteil 200 kann über das Mundstück 210 mit fachüblichen Methoden, beispielsweise durch einen Haltering (nicht dargestellt), fest an einer Form (nicht dargestellt) montiert werden.

Das dargestellte Mundstück 210 besitzt ein Außengewinde und ist damit in das Vorderteil 200 eingeschraubt. Das dargestellte Mundstück 210 weist eine, beispielsweise zur Längsachse LA des Vorderteils 200 koaxiale, Bohrung 211 auf, die von der mit dem Vorderteil 200 verbundenen Seite aus zunächst achsparallel und schließlich konisch zulaufend verläuft. In den achsparallelen Teil kann eine Düse 331 des Antriebs 300 beim Montagevorhang eingeschoben werden.

Am dem Mundstück 210 abgewandten Verbindungsende 202 des dargestellten Vorderteils 200 befindet sich ein Außengewinde, auf welchem die Ringmutter 222 und der Adapter 221 aufgeschraubt sind. Durch Verschieben von Ringmutter 222 und Adapter 221 entlang des Außengewindes kann eine Länge des Vorderteils 200 entlang der Längsachse LA eingestellt werden. Eine enge Tolerierung der Einzelteilmaße ist daher nicht erforderlich, was sich Zugunsten der Herstellungskosten auswirkt. Es ist selbstverständlich, dass bei genügend enger Tolerierung der Bauteilmaße auf die Ringmutter 222 verzichtet werden könnte, und alle Komponenten fest gegeneinander geschraubt würden. Dies würde die Herstellungskosten jedoch unnötig in die Höhe treiben.

Am dem Mundstück 210 abgewandten Ende des Adapters 221 ist beispielsweise auf der Außenseite des Adapters 221 ein Dichtelement DE angebracht, welches das Vorderteil 200 und das Antriebsteil 300 im montierten Zustand gegenüber der Atmosphäre abdichtet. Die Platzierung an dieser Position lässt eine schnelle und unkomplizierte Wartung zu, denn das Prüfen und ggf. Auswechseln fällt leichter, als wenn das Dichtungselement DE im inneren der Verbindungsvorrichtung 400 eingebaut wäre, da es gut sichtbar positioniert ist.

Das Vorderteil 200 besteht aus wenigen Komponenten. Das Gros der Teile des dargestellten Injektors 100 befindet sich auf Seiten des Antriebsteils 300. Zusätzliche Formen müssen stets nur mit Vorderteilen 200 ausgestattet werden. Der Erwerb von kompletten Injektoren 100 entfällt daher. Somit lassen sich die laufenden Investitionskosten für verschiedene Formen gering halten.

Das Antriebsteil 300 des dargestellten Injektors 100 umfasst beispielsweise eine Düse 331, ein Innenrohr 330, eine Verbindungsvorrichtung 400 und einen Materialanschluss 342. Der dargestellte Antriebsteil 300 kann in die das Vorderteil 200 eingeführt und durch die Verbindungsvorrichtung 400 in seiner Lage entlang der Längsachse LA fixiert werden. Dazu wird bei dem Montagevorgang lediglich das Bedienelement 440 in Form einer ringförmigen Vertiefung an der Außenseite des Rahmenelements 450 der Verbindungsvorrichtung 400, insbesondere von Hand, entgegen der Federkraft des Federelements 430 in Form einer Spiralfeder aus einer dargestellten Betriebsposition in eine Montageposition verschoben, sodass das Rahmenelement 450 die davon fixierten Konnektoren 410 in Form von Kugeln radial freigibt. Der Adapter 221 des Vorderteils 200 kann daraufhin in das Rahmenelement 450 eingeführt werden. Durch das Federelement 430 innerhalb der Verbindungsvorrichtung 400 wird das Rahmenelement 450 in die Betriebsposition zurückgedrückt. Die Konnektoren 410 greifen in die Gegenkonnektoren 420 in Form einer umlaufenden Nut des Adapters 221 ein. Somit sind Vorderteil 200 und Antriebsteil 300 entlang der Längsachse LA formschlüssig miteinander verbunden. Dazu ist kein zusätzliches Werkzeug erforderlich.

Durch eine Bauweise mit zwei Rohren 200, 330 ist beispielsweise das Antriebsteil 300 bereits beim Einführen in das Vorderteil 200 geführt. Durch eine zusätzliche, am dem Mundstück 210 zugewandten Ende der Düse 331, angebrachte Fase 332 kann es bei einem Montagevorgang nicht zu einem Verkanten zwischen Adapter 221 und Rahmenelement 450 oder zwischen Düse 331 und Mundstück 210 kommen. Die Montage lässt sich dadurch auch an schwer zugänglichen Stellen einer Form leicht durchführen.

Über den dargestellten Materialanschluss 342 kann der Injektor 100 mit einem Schlauch (nicht dargestellt) an ein externes Materialsilo (nicht dargestellt) angeschlossen werden. Dazu ist in dem Materialanschluss 342 beispielsweise ein Innengewinde (nicht dargestellt) vorgesehen, in welches fachübliche Schlauchadapter eingeschraubt werden können.

Über zwei Pneumatikanschlüsse 341 wird beispielsweise ein doppelt wirkender Pneumatikzylinder 350 angesteuert, der dazu ausgelegt ist, die Bohrung 211 des Mundstücks durch ein Verschieben eines auf einer Kolbenstange 311 aufgeschraubten Kolbens 310 von einer dargestellten Befüllposition in eine Verschlussposition zu verschließen. In dem Antriebsteil 300 kann eine Dichtung (nicht sichtbar) enthalten sein, die den Pneumatikzylinder 350 abdichtet. In dem Pneumatikzylinder 350 ist ein weiterer Kolben (nicht sichtbar) an der Kolbenstange 311 angebracht. Der weitere Kolben kann durch Beaufschlagung mit Druckluft über zumindest jeweils einen der beiden Pneumatikanschlüsse 341 entlang der Längsachse LA verschoben werden, um den Kolben 310 von der Befüllposition in die Verschlussposition und umgekehrt zu verschieben.

Der dargestellte Kolben 310 ist beispielsweise mit einer Kontermutter 313 auf einem Außengewinde an der Düsenseite an der Kolbenstange 311 angebracht. Diese Bauweise ermöglicht eine Längeneinstellbarkeit des Systems aus Kolben 310 und Kolbenstange 311.

Das dargestellte Antriebsteil 300 umfasst einen Druckluftanschluss 340 zum Einleiten der Treibluft für den Füllvorgang, welche beispielsweise durch die Düse 331 in eine Kavität der Form geleitet wird.

Die dargestellte Düse 331 ist beispielsweise in das Innenrohr 330 eingeschraubt. Auf einem äußeren Umfang der dargestellten Düse 331 sitzt ein Dichtelement DE in Form eines O-Rings, welches im montierten Zustand verhindert, dass Luft durch den Ringspalt zwischen Düse 331 und Mundstück 210 strömt. Dadurch wird die Druckluft durch die Düsenbohrungen 333 geleitet und so in einem definierten Winkel in das Mundstück 210 und damit in eine Kavität der Form eingeleitet.

Das dargestellte Innenrohr 330 ist beispielsweise durch ein am der Düse 331 abgewandten Ende vorhandenes Außengewinde in das Antriebsteil 300 eingeschraubt und kann mit Gewindesicherungsklebstoff stoffschlüssig gesichert sein.

Die Verbindungsvorrichtung 400 ist beispielsweise ebenfalls fest in das Antriebsteil 300 eingeschraubt, und die Schraubverbindung kann mit Klebstoff gesichert sein. Die dargestellte Verbindungsvorrichtung 400 umfasst aus ein Rahmenelement 450 mit mehreren Konnektoren 410 in Form von Kugeln, die in einer Mehrzahl von, insbesondere um die Längsachse LA gleichmäßig verteilten, konischen Bohrungen sitzen und sich nur in zur Längsachse LA radialer Richtung bewegen können, wenn das Rahmenelement 450 gegen eine Kraft des Federelements 430 aus der dargestellten Betriebsposition in die Montageposition gezogen ist.

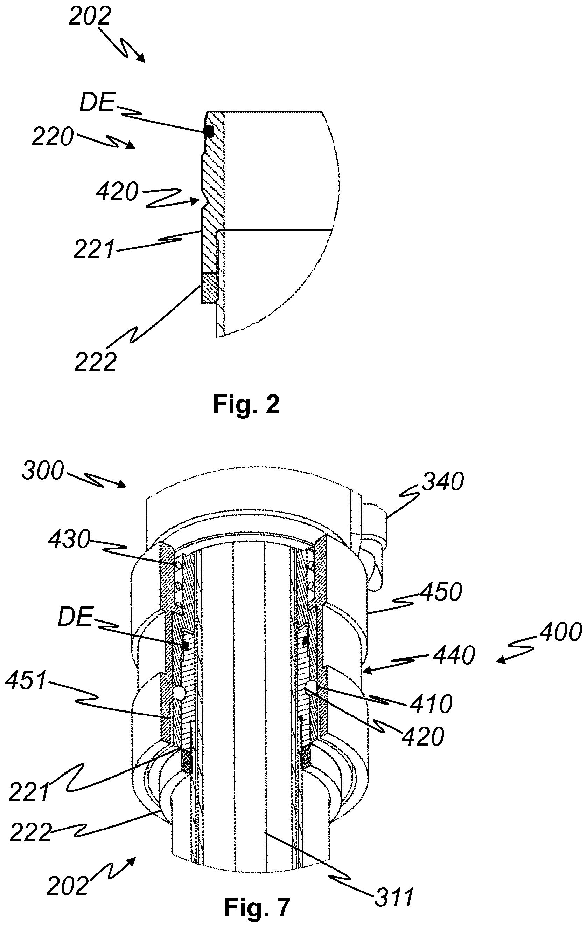

Figur 2 zeigt eine Vergrößerung des mit Z markierten Teilbereichs von Figur 1. In dieser Darstellung sind insbesondere der Gegenkonnektor 420 in Form einer umlaufenden Nut und das Dichtelement DE in Form eines O-Rings deutlich zu erkennen. Durch die dargestellte Positionierung des Dichtelements DE können das Vorderteil 200 und das Antriebsteil 300 besonders vorteilhaft mit nur einem Dichtelement DE, das außerdem zur Wartung leicht zugänglich ist, luftdicht miteinander verbunden werden, sodass keine Druckluft unkontrolliert aus dem Injektor 100 austreten kann.

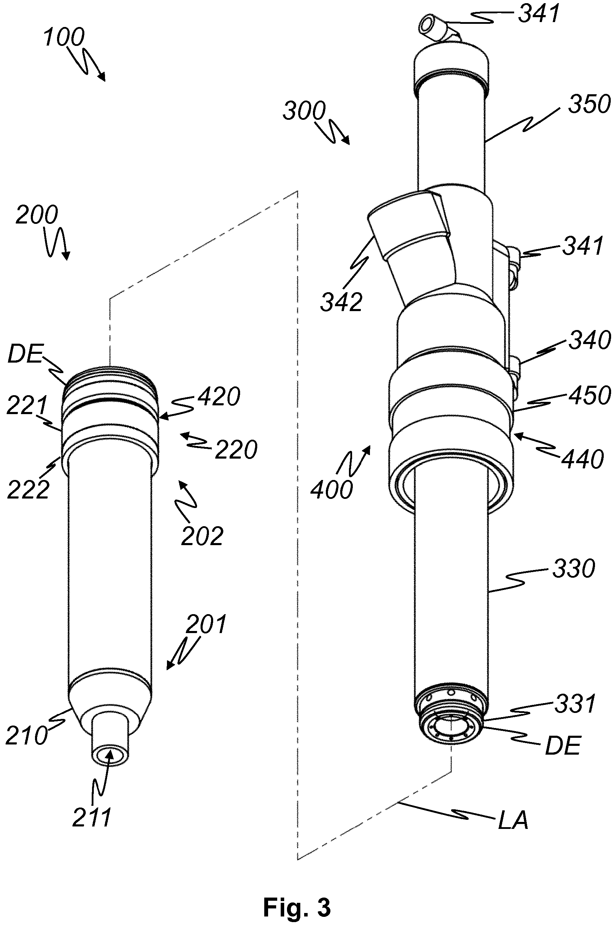

Figur 3 zeigt eine perspektivische Zeichnung des Injektors 100 aus Figur 1. Zur Montage kann das Antriebsteil 300 entlang der Längsachse LA in das Vorderteil 200 eingeschoben werden.

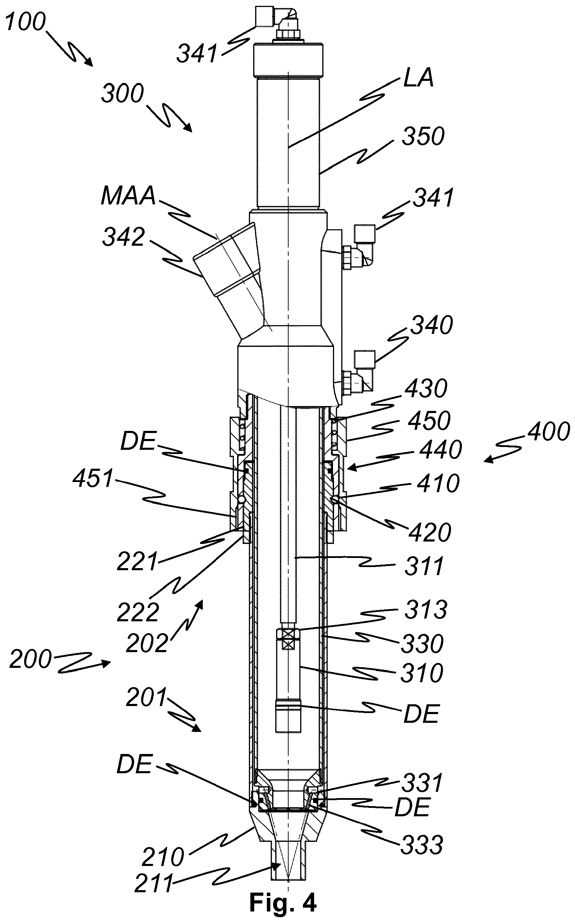

Figur 4 zeigt eine Längsschnittzeichnung des Injektors 100 aus Figur 1, wobei Vorderteil 200 und Antriebsteil 300 durch die Verbindungsvorrichtung 400 aneinander entlang der Längsachse LA fixiert sind.

In der Darstellung von Figur 4 befindet sich der Kolben 310 in einer Befüllposition. In der Befüllposition kann über einen Druckluftanschluss 340 Druckluft einer an das Mundstück 210 des Injektors 100 angeschlossenen Form (nicht dargestellt) zugeführt werden. Diese strömt durch den Spalt zwischen Vorderteil 200 und Innenrohr 330 bis an dessen dem Mundstück 210 zugewandtes Ende, wo die Druckluft durch eine Anzahl von Düsenbohrungen 333 fokussiert in das Mundstück 210 und somit in eine Kavität der Form geleitet wird. Durch den dabei entstehenden Unterdruck im Innenrohr 330 werden Kunststoffteilchen durch den Materialanschluss 342 aus einem Materialsilo (nicht dargestellt) angesaugt und mit in die Kavität transportiert. Der Materialanschluss 342 kann eine Materialanschlussachse MAA aufweisen, die gegenüber der Längsachse LA geneigt ist. Dadurch ist eine besonders einfache und kompakte Bauweise des Injektors 100 möglich.

Da die Düse 331 im geteilten Zustand des Injektors 100 leicht zugänglich ist, kann diese ohne größeren Aufwand ausgetauscht werden. Dies ist beispielsweise dann erforderlich, wenn der Luftverbrauch des Injektors an das zu verarbeitende Material angepasst werden soll. Das gleiche Antriebsteil 300 kann daher - mit mehreren Wechseldüsen ausgestattet - für verschiedene Kunststoffe (mit verschiedenen Dichten) optimal genutzt werden.

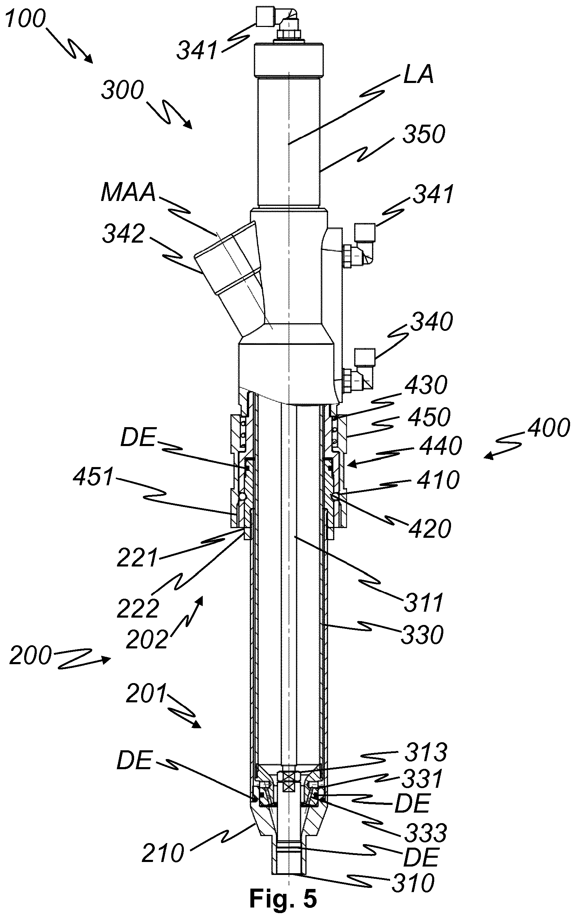

Figur 5 zeigt eine Längsschnittzeichnung des Injektors 100 aus Figur 1, wobei Vorderteil 200 und Antriebsteil 300 durch die Verbindungsvorrichtung 400 aneinander entlang der Längsachse LA fixiert sind.

In der Darstellung von Figur 5 befindet sich der Kolben 310 in einer Verschlussposition, in der die Bohrung 211 des Mundstücks 210 durch den Kolben 310 verschlossen ist. Zum dichten Verschließen der Bohrung 211 kann der Kolben 310 zumindest ein Dichtelement DE, beispielsweise einen O-Ring, aufweisen.

In der Verschlussposition wird verhindert, dass in einer an dem Mundstück 210 angeschlossenen Form (nicht dargestellt) aufschäumender Kunststoff in den Injektor 100 eindringt. Vorteilhafterweise schließt der Kolben 310 in der Verschlussposition bündig mit der der Form zugewandten Seite des Mundstücks 310 ab. Andernfalls könnte durch das Hervor- oder Zurückstehen des Kolbens 310 an dem aufgeschäumten Formteil ein unerwünschter Abdruck desselben entstehen. Dafür müssen die Längen von Vorderteil 200, Kolben 310 und Kolbenstange 311 entlang der Längsachse LA präzise aufeinander abgestimmt sein. Um dies wirtschaftlich umzusetzen, verfügt das dargestellte Vorderteil 200 über eine Ringmutter 222, welche die Position des Adapters 221 auf dem Vorderteil 200 entlang der Längsachse LA sichert. Bei dem dargestellten Antriebsteil 300 lässt sich die Position des Kolbens 310 entlang der Längsachse LA beispielsweise durch eine Kontermutter 313 einstellen und fixieren. Beide Teile könne somit von Werk aus auf ein Referenzmaß voreingestellt werden. Eine besonders enge Tolerierung der Einzelteilmaße ist daher nicht erforderlich, was sich zugunsten der Herstellungskosten auswirkt. Es ist selbstverständlich, dass bei genügend enger Tolerierung der Bauteilmaße auf die Ringmutter 222 und die Kontermutter 313 verzichtet werden könnte, und insbesondere alle Komponenten fest gegeneinander geschraubt werden könnten. Dies würde die Herstellungskosten jedoch unnötig in die Höhe treiben.

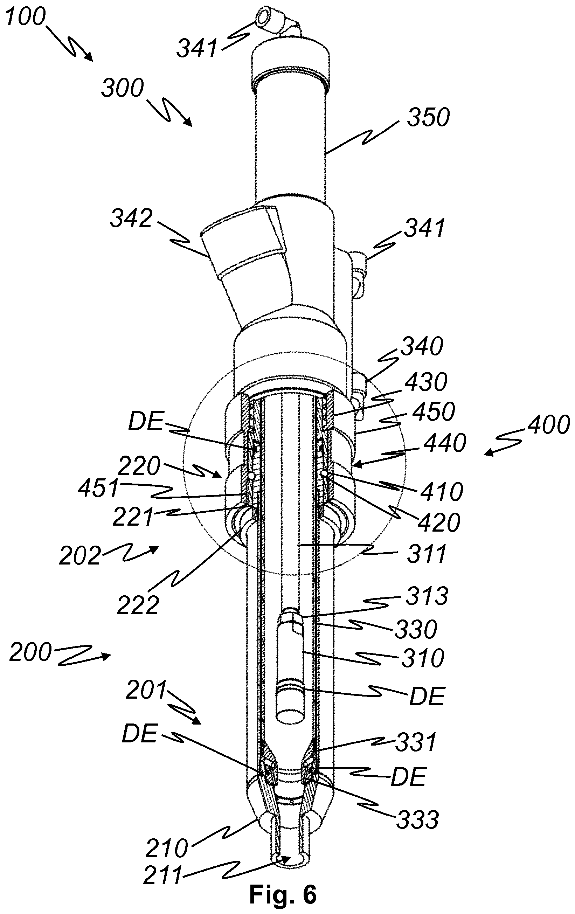

Figur 6 zeigt eine perspektivische Zeichnung des Injektors 100 aus Figur 4.

Figur 7 zeigt eine Vergrößerung des mit X markierten Teilbereichs von Figur 6. In der vergrößerten Darstellung ist deutlich zu erkennen, dass das dargestellte Rahmenelement 450 an seiner Innenseite so geformt ist, dass es in der dargestellten Betriebsposition die kugelförmigen Konnektoren 410 in dem nutförmigen Gegenkonnektor 420 des Adapters 222 radial fixiert. Wird das dargestellte Rahmenelement 450 gegen die Kraft des Federelements 430 auf das Antriebsteil 300 zu in die Montageposition verschoben, können sich die Konnektoren 410 in eine an der Innenseite des Rahmenelements 450 umlaufende Ausnehmung 451 radial nach außen bewegen. Dadurch sind die Konnektoren 410 nicht mehr in den Gegenkonnektoren 420 fixiert, sodass das Vorderteil 200 aus der Verbindungsvorrichtung 400 herausgezogen und somit von dem Antriebsteil 300 getrennt werden kann.

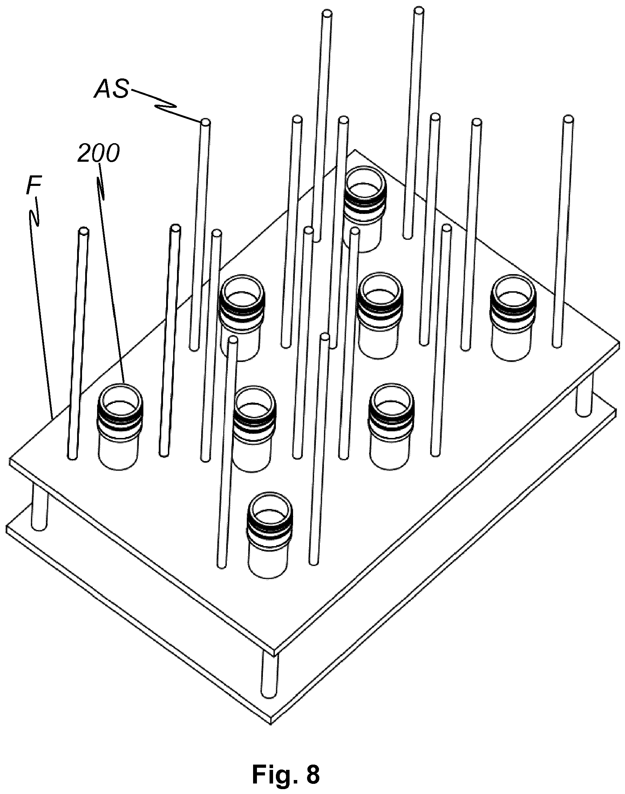

Figur 8 zeigt eine schematische Darstellung einer mit erfindungsgemäßen Vorderteilen 200 (nur exemplarisch beschriftet) bestückten Form F. Weiterhin weist die Form F eine Anzahl von Auswerferstangen AS (nur exemplarisch beschriftet) auf, so dass der Raum für eine Montage von Antriebsteilen (nicht dargestellt) an den Vorderteilen 200 sehr beengt ist.

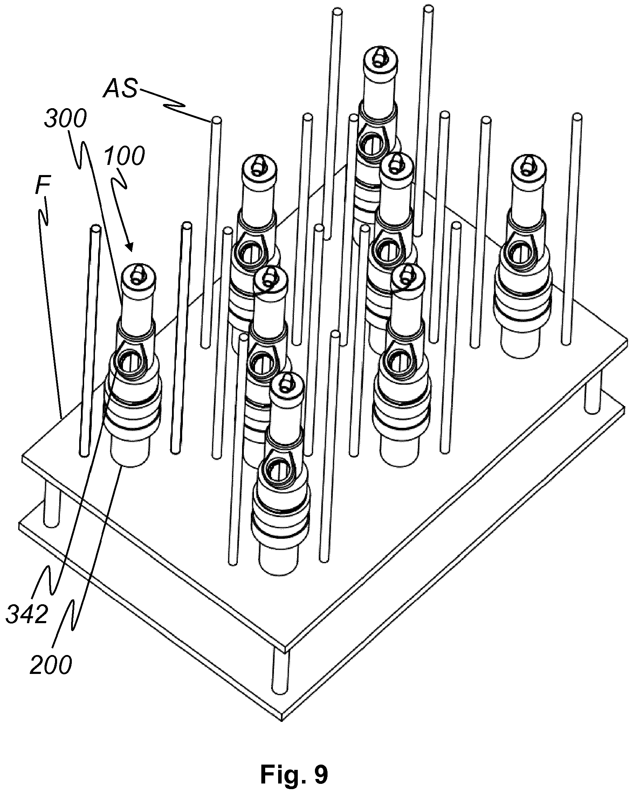

Figur 9 zeigt eine schematische Darstellung der Form F aus Figur 8, wobei die Form F mit erfindungsgemäßen Injektoren 100 (nur exemplarisch beschriftet) bestückt ist. Die Antriebsteile 300 der Injektoren 100 können um die Längsachsen der Vorderteile 200 der Injektoren 100 gedreht werden. Dadurch können insbesondere Zuleitungen (nicht dargestellt) für Kunststoffteilchen an dem Materialanschlüssen 342 der Antriebsteile 300 trotz des, beispielsweise durch Auswerferstangen AS und/oder weitere Injektoren, beengten Raums einfach angeschlossen werden.

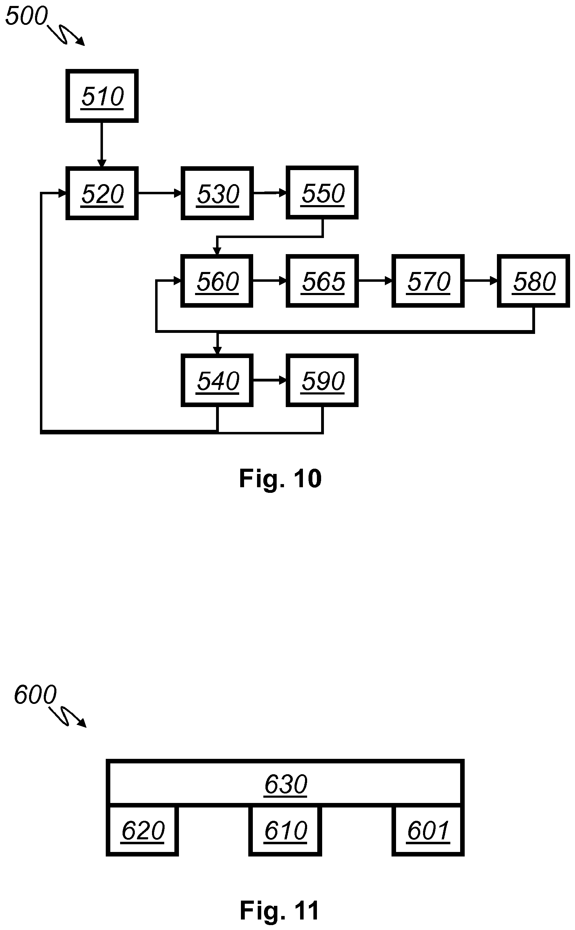

Figur 10 zeigt eine schematische Darstellung eines erfindungsgemäßen Verfahrens 500. Das Verfahren 500 umfasst ein Bestücken 510 von einer Anzahl von Formen F mit, insbesondere erfindungsgemäßen, Vorderteilen 200 von Injektoren 100. Darauf kann ein Befestigen 520 von Antriebsteilen 300 an den Vorderteilen 200 an zumindest einer Form F erfolgen, um an der Form F erfindungsgemäße Injektoren 100 bereitzustellen. Die Antriebsteile 300 können nach dem Befestigen 520 ein Ausrichten 530 jeweils um eine Längsachse LA der Vorderteile 200 erfahren. Durch das Ausrichten 530 wird ein nachfolgendes Anschließen 550 von Zuleitungen, beispielsweise für Druckluft und/oder Kunststoffteilchen, an den Antriebsteilen 300 erleichtert.

An die vorgenannten Vorbereitungsschritte kann sich die Herstellung von Formteilen in der Form F anschließen. Die Herstellung umfasst beispielsweise ein Befüllen 560 der Form F mit Kunststoffteilchen durch die Injektoren 100; ein Verschließen 565 der Einfüllöffnungen der Form F, an denen die Injektoren 100 angeschlossen sind, durch Kolben 310 der Injektoren 100; ein Aufschäumen 570 der Kunststoffteilchen in der Form F und ein Auswerfen 580 des aufgeschäumten Kunststoffformteils aus der Form F, beispielsweise durch Auswerferstangen AS und/oder die Kolben 310 der Injektoren 100. Das Befüllen 560, verschließen 565, Aufschäumen 570 und Auswerfen 580 kann so oft wiederholt werden, bis die gewünschte Menge an Formteilen mit der Form F hergestellt ist.

Soll eine weitere Form F verwendet werden, beispielsweise um anders geformte Formteile herzustellen, kann ein Lösen 540 der Antriebsteile 300 von den an der Form F angeschlossenen Vorderteilen 200 erfolgen. Daran kann sich ein Befestigen 520 der Antriebsteile 300 an den an der weiteren Form F angeschlossenen Vorderteilen 200 erfolgen, woran sich die weiteren Verfahrensschritte die bei der Form F anschließen können. So kann eine Vielzahl von Formen F mit einer geringen Zahl von Antriebsteilen 300 verwendet werden. Beispielsweise nach dem Lösen 540 kann eine Warten 590 der voneinander getrennten Vorderteile 200 und/oder Antriebsteile 300, beispielsweise mit einer Reinigung und/oder einem Überprüfen und/oder Austauschen von Verschleißteilen, erfolgen. Bei erfindungsgemäßen Injektoren 100 sind Verschleißteile vorteilhafterweise so angeordnet, dass sie leicht zugänglich sind, wenn die Vorderteile 200 und Antriebsteile 300 der Injektoren 100 voneinander getrennt sind.

Figur 11 zeigt eine schematische Darstellung einer erfindungsgemäßen Produktionsanlage 600. Die dargestellte Produktionsanlage 600 zur Herstellung von Formteilen aus Kunststoff in einer Anzahl von Formen F mit zumindest einem Schäumautomaten 601 umfasst eine Bestückungsstation 620 zum Bestücken 510 der Formen F mit, insbesondere erfindungsgemäßen, Vorderteilen 200.

Die dargestellte Produktionsanlage 600umfasst ferner eine Rüststation 610 zum Befestigen 520 von Antriebsteilen 300 an den an zumindest einer der Formen F angebrachten Vorderteile zur Bildung von erfindungsgemäßen Injektoren 100 und/oder zum Lösen 540 der Antriebsteile 300 von den Vorderteilen 200.

Außerdem umfasst die dargestellte Produktionsanlage 600 ein Transportsystem 630 zum Transportieren der Formen F, beispielsweise in Form eines den Schäumautomaten 601, die Rüststation 610 und/oder die Bestückungsstation 620 miteinander verbindenden Schienensystems mit einer daran geführten Anzahl von Transportrobotern.

Die Merkmalskombinationen in der Figurenbeschreibung sind lediglich beispielhaft und erfindungsgemäß nicht zwingend, sofern nicht eine technische Notwendigkeit zur Kombination explizit benannt ist.

### Bezugszeichenliste

- 100: Injektor
- 200: Vorderteil
- 201: Mündungsende
- 202: Verbindungsende
- 210: Mundstück
- 211: Bohrung
- 220: Einstellelement
- 221: Adapter
- 222: Ringmutter
- 300: Antriebsteil
- 310: Kolben
- 311: Kolbenstange
- 313: Kontermutter
- 330: Innenrohr
- 331: Düse
- 332: Fase
- 333: Düsenbohrung
- 340: Druckluftanschluss
- 341: Pneumatikanschluss
- 342: Materialanschluss
- 350: Pneumatikzylinder
- 400: Verbindungsvorrichtung
- 410: Konnektor
- 420: Gegenkonnektor
- 430: Federelement
- 440: Bedienelement
- 450: Rahmenelement
- 452: Ausnehmung
- 500: Verfahren
- 510: Bestücken
- 520: Befestigen
- 530: Ausrichten
- 540: Lösen
- 550: Anschließen
- 560: Befüllen
- 565: Verschließen
- 570: Aufschäumen
- 580: Auswerfen
- 590: Warten
- 600: Produktionsanlage
- 601: Schäumautomat
- 610: Rüststation
- 620: Bestückungsstation
- 630: Transportsystem
- AS: Auswerferstange
- DE: Dichtelement
- F: Form
- LA: Längsachse
- MAA: Materialanschlussachse
- X, Z: Teilbereich

## Patentansprüche

1. Injektor (100) zum Befüllen einer Form (F) mit Kunststoffteilchen, umfassend
a. ein Vorderteil (200) mit einem Mündungsende (201) zum Anschluss an die Form (F) und
b. ein Antriebsteil (300) zur Anordnung an einem dem Mündungsende (201) gegenüberliegenden Verbindungsende (202) des Vorderteils (200) mit einem in das Vorderteil (200) einführbaren Kolben (310) sowie einem Antrieb zur Bewegung des Kolbens (310) entlang einer Längsachse (LA) des Vorderteils, und
c. eine Verbindungsvorrichtung (400) zur lösbaren Fixierung des Antriebsteils (300) an dem Vorderteil (200), wobei das Antriebsteil (300) um die Längsachse (LA) drehbar an dem Vorderteil (200) gelagert ist,
**dadurch gekennzeichnet, dass**
der Antrieb eine entlang der Längsachse (LA) verstellbar an dem Kolben (310) befestigte Kolbenstange (311) umfasst.

2. Injektor (100) gemäß Anspruch 1,
**dadurch gekennzeichnet, dass**
die Verbindungsvorrichtung (400) an dem Antriebsteil (300), bevorzugt durch eine Schraubverbindung, befestigt ist.

3. Injektor (100) gemäß Anspruch 1 oder 2,
**dadurch gekennzeichnet, dass**,
die Verbindungsvorrichtung (400) eine Anzahl von Konnektoren (410) zur Fixierung der Verbindungsvorrichtung (400) an dem Antriebsteil (300) oder an dem Vorderteil (200) in axialer Richtung bezüglich der Längsachse (LA) umfasst, wobei die Konnektoren (410) bevorzugt dazu ausgelegt sind, mit einer Anzahl von Gegenkonnektoren (420) an dem Vorderteil (200) oder dem Antriebsteil (300) gegenüber einer Bewegung entlang der Längsachse (LA) formschlüssig zusammenzuwirken. wobei besonders bevorzugt
a. die Konnektoren (410) an der Verbindungsvorrichtung (400) radial zur Längsachse (LA) beweglich gelagert sind, und/oder
b. die Gegenkonnektoren (420) an dem Vorderteil (200) oder dem Antriebsteil (300) radial zur Längsachse (LA) beweglich gelagert sind.

4. Injektor (100) gemäß Anspruch 3,
**dadurch gekennzeichnet, dass**
die Verbindungsvorrichtung (400) ein, bevorzugt entlang der Längsachse (LA), von einer Betriebsposition in eine Montageposition verschiebbares Rahmenelement (450) umfasst, wobei das Rahmenelement (450) die Konnektoren (410) und/oder Gegenkonnektoren (420) in der Betriebsposition in einer in axialer Richtung formschlüssig zusammenwirkenden Position fixiert und in der Montageposition für eine Bewegung radial zur Längsachse (LA) frei gibt, wobei bevorzugt ein Federelement (430) das Rahmenelement (450) in der Betriebsposition hält.

5. Injektor (100) gemäß einem der Ansprüche 1 bis 4,
**dadurch gekennzeichnet, dass**
die Verbindungseinrichtung (400) ein Bedienelement (440), bevorzugt einen Handgriff, zum Lösen der Fixierung des Antriebsteils (300) an dem Vorderteil (200), bevorzugt durch Überwinden einer Kraft eines Federelements (430), umfasst, wobei das Bedienelement (440) bevorzugt an dem Injektor (100) befestigt ist.

6. Injektor (100) gemäß einem der Ansprüche 1 bis 5,
**gekennzeichnet durch**
ein Innenrohr (330) zur Anordnung in dem Vorderteil (100), wobei das Innenrohr (330) bevorzugt
a. an dem Antriebsteil (300), besonders bevorzugt durch eine Schraubverbindung, befestigt ist;
b. an seinem dem Mündungsende (201) zugewandten Ende eine Fase (332) aufweist; und/oder
c. an seinem dem Mündungsende (201) zugewandten Ende eine Düse (331) mit zur Längsachse (LA) geneigten Düsenbohrungen (333) zur Führung von Druckluft an das Mündungsende (201) aufweist.

7. Injektor (100) gemäß einem der Ansprüche 1 bis 6,
**dadurch gekennzeichnet,dass**
der Antrieb einen an dem von dem Kolben (310) abgewandten Ende der Kolbenstange (311) befestigten Antriebskolben, der in einem Pneumatikzylinder (350) entlang der Längsachse (LA) verschiebbar angeordnet ist, umfasst.

8. Vorderteil (200) für einen Injektor (100) gemäß einem der Ansprüche 1 bis 7 zum Befüllen einer Form (F) mit Kunststoffteilchen mit einem Mündungsende (201) zum Anschluss des Vorderteils (200) an die Form (F) und einem dem Mündungsende (201) gegenüberliegenden Verbindungsende (202) zur Verbindung des Vorderteils (200) mit einem Antriebsteil (300) des Injektors (100),
**gekennzeichnet durch**
ein Einstellelement (220) zum Einstellen einer Länge des Vorderteils (200) entlang einer Längsachse (LA) des Vorderteils (200).

9. Vorderteil (200) gemäß Anspruch 8,
**dadurch gekennzeichnet, dass**
das Einstellelement (220) einen an dem Verbindungsende (202) entlang der Längsachse (LA) verstellbar befestigten Adapter (221) zur Verbindung des Vorderteils (200) mit dem Antriebsteil (300) und/oder einer Verbindungsvorrichtung (400) umfasst, wobei das Vorderteil (200) bevorzugt ein Gewinde aufweist, auf das der Adapter (221) und/oder eine Ringmutter (222) zur Sicherung des Adapters (221) aufgeschraubt ist.

10. Vorderteil (200) gemäß Anspruch 8 oder 9,
**gekennzeichnet durch**
eine Montagehilfe, ausgewählt aus
a. einem an dem Mündungsende (201) angeordneten Mundstück (210), das eine, bevorzugt zur Längsachse (LA) koaxiale, Bohrung (211) umfasst, die zu einem dem Mündungsende (201) zugewandten Ende eines in das Vorderteil (200) einzuführenden Innenrohrs (330) komplementär geformt ist und sich bevorzugt zumindest abschnittsweise in einer Einführrichtung des Innenrohrs (330) entlang der Längsachse (LA) konisch verjüngt, und
b. einem Anzeigemittel zur Anzeige eines bündigen Abschlusses eines in das Vorderteil (200) eingeführten Kolbens (310) mit dem Mündungsende (201).

11. Verfahren (500) zur Herstellung von Formteilen aus Kunststoff in einer Anzahl von Formen (F) mit zumindest folgenden Schritten:
a. Bestücken (510) der Formen (F) mit jeweils einer Anzahl von Vorderteilen (200) von Injektoren (100) gemäß einem der Ansprüche 1 bis 7 zum Befüllen der Formen (F) mit Kunststoffteilchen und
b. Befestigen (520) von jeweils einem Antriebsteil (300) zumindest an den an einer Form (F) angebrachten Vorderteilen (200), wobei jeweils ein Antriebsteil (300) an einem Vorderteil (200) radial und axial zu einer Längsachse (LA) des Vorderteils (200) fixiert und um die Längsachse (LA) drehbar ist, und
c. Ausrichten (530) der Antriebsteile (300) durch Rotation um die Längsachse (LA) nach dem Befestigen (520) der Antriebsteile (300).

12. Verfahren (500) gemäß Anspruch 11,
**dadurch gekennzeichnet, dass**
das Bestücken (510) an einer größeren Anzahl von Formen (F) erfolgt als das Befestigen (520), und das Verfahren (500) bevorzugt ein Lösen (540) der Antriebsteile (300) zumindest von den an einer Form (F) angebrachten Vorderteilen (200) und besonders bevorzugt ein weiteres Befestigen (520) der gelösten Antriebsteile (300) an den an einer weiteren Form (F) angebrachten Vorderteilen (200) umfasst.

13. Verfahren (500) gemäß Anspruch 11 oder 12,
**dadurch gekennzeichnet, dass**
das Befestigen (520), das weitere Befestigen (520) und/oder das Lösen (540) mit einem von Hand bedienbaren Bedienelement (440) einer Verbindungsvorrichtung (400) des jeweiligen Injektors (100) erfolgen.

14. Produktionsanlage (600) zur Herstellung von Formteilen aus Kunststoff in einer Anzahl von Formen (F) mit
a. zumindest einem Schäumautomaten (601), und
b. zumindest einer Rüststation (610) zum Befestigen (520) von Antriebsteilen (300) an an zumindest einer der Formen (F) angebrachten Vorderteilen (200) zur Bildung von Injektoren (100) gemäß einem der Ansprüche 1 bis 7 und/oder zum Lösen (540) der Antriebsteile (300) von den Vorderteilen (200),
**gekennzeichnet durch**
zumindest ein motorisiertes und/oder automatisiertes Transportsystem (630) zum Transportieren der Formen (F) zwischen dem Schäumautomaten (601) und der Rüststation (610).

15. Produktionsanlage (600) gemäß Anspruch 14,
**gekennzeichnet durch**
zumindest eine Bestückungsstation (620) zum Bestücken (510) der Formen (F) mit den Vorderteilen (200).

## Claims

1. Injector (100) for filling a mould (F) with plastic particles, comprising
a. a front part (200) with a mouth end (201) for connection to the mould (F) and
b. a drive part (300) for arrangement at a connection end (202) of the front part (200) opposite the mouth end (201) with a piston (310) insertable into the front part (200) and a drive for moving the piston (310) along a longitudinal axis (LA) of the front part (200), and
c. a connecting device (400) for releasably fixing the drive part (300) to the front part (200), the drive part (300) being mounted on the front part (200) rotatably about the longitudinal axis (LA),
**characterized in that**
the drive has a piston rod (311) attached to the piston (310) adjustably along the longitudinal axis (LA).

2. Injector (100) according to claim 1,
**characterized in that**
the connecting device (400) is fastened to the drive part (300), preferably by a screw connection.

3. Injector (100) according to claim 1 or 2,
**characterized in that**,
the connecting device (400) comprises a number of connectors (410) for fixing the connecting device (400) to the drive part (300) or to the front part (200) in an axial direction with respect to the longitudinal axis (LA), wherein the connectors (410) are preferably designed to interact positively with a number of mating connectors (420) on the front part (200) or the drive part (300) against movement along the longitudinal axis (LA), wherein particularly preferably
a. the connectors (410) are mounted on the connecting device (400) so as to be movable radially to the longitudinal axis (LA), and / or
b. the mating connectors (420) are mounted on the front part (200) or the drive part (300) so that they can move radially to the longitudinal axis (LA).

4. Injector (100) according to claim 3,
**characterized in that**
the connecting device (400) comprises a frame element (450) which can be displaced, preferably along the longitudinal axis (LA), from an operating position into an assembly position, the frame element (450) fixing the connectors (410) and / or mating connectors (420) in the operating position in a position cooperating positively in the axial direction and allowing for movement of the connectors (410) and / or mating connectors (420) radially to the longitudinal axis (LA) in the mounting position, wherein a spring element (430) preferably holds the frame element (450) in the operating position.

5. Injector (100) according to one of claims 1 to 4,
**characterized in that**
the connecting device (400) comprises an operating element (440), preferably a handle, for releasing the fixation of the drive part (300) on the front part (200), preferably by overcoming a force of a spring element (430), wherein the operating element (440) is preferably attached to the injector (100).

6. Injector (100) according to one of claims 1 to 5,
**characterized by**
an inner tube (330) for arrangement in the front part (100), the inner tube (330) preferably
a. being fastened to the drive part (300), particularly preferably by means of a screw connection;
b. having a chamfer (332) at its end facing the mouth end (201); and / or
c. having a nozzle (331) at its end facing the mouth end (201) with nozzle bores (333) inclined to the longitudinal axis (LA) for guiding compressed air to the mouth end (201).

7. Injector (100) according to one of Claims 1 to 6,
**characterized in that**
the drive has a drive piston attached to the end of the piston rod (311) facing away from the piston (310), the drive piston being arranged slidably along the longitudinal axis (LA) in a pneumatic cylinder (350).

8. Front part (200) for an injector (100) according to one of claims 1 to 7 for filling a mould (F) with plastic particles with a mouth end (201) for connecting the front part (200) to the mould (F) and a connection end (202) opposite the mouth end (201) for connecting the front part (200) to a drive part (300) of the injector (100),
**characterized by**
an adjusting element (220) for setting a length of the front part (200) along a longitudinal axis (LA) of the front part (200).

9. Front part (200) according to Claim 8,
**characterized in that**
the adjusting element (220) has an adapter (221), which is attached to the connecting end (202) adjustably along the longitudinal axis (LA), for connecting the front part (200) to the drive part (300) and / or to a connecting device (400), the front part (200) preferably having a thread onto which the adapter (221) and / or a ring nut (222) is screwed to secure the adapter (221).

10. Front part (200) according to claim 8 or 9,
**characterized by**
an assembly aid selected from
a. a mouthpiece (210) arranged at the mouth end (201), which comprises a bore (211), which is preferably coaxial with the longitudinal axis (LA), the bore (211) being complementary in shape to an end of an inner tube (350) to be inserted into the front part (200) facing the mouth end (201) and preferably tapering at least in sections in an insertion direction of the inner tube (330) along the longitudinal axis (LA), and
b. a display means for displaying a flush termination of a piston (310) inserted into the front part (200) with the mouth end (201).

11. Method (500) for manufacturing moulded parts made of plastic in a number of moulds (F) with at least the following steps:
a. Equipping (510) each of the moulds (F) with a number of front parts (200) of injectors (100) according to one of claims 1 to 7 for filling the moulds (F) with plastic particles and
b. Fastening (520) in each case a drive part (300) at least to the front parts (200) attached to a mould (F), in each case a drive part (300) being fixed to a front part (200) radially and axially to a longitudinal axis (LA) of the front part (200) and being rotatable about the longitudinal axis (LA), and
c. Aligning (530) the drive parts (300) by rotation about the longitudinal axis (LA)
after the step of fastening (520) the drive parts (300).

12. Method (500) according to claim 11,
**characterized in that**
the step of equipping (510) takes place on a larger number of moulds (F) than the step of fastening (520), and the method (500) preferably comprises a step of releasing (540) the drive parts (300) at least from the front parts (200) attached to one mould (F) and particularly preferably a further step of fastening (520) of the released drive parts (300) to the front parts (200) attached to a further mould (F).

13. Method (500) according to claim 11 or 12,
**characterized in that**
the step of fastening (520), the further step of fastening (520) and / or the step of releasing (540) takes place with a hand-operated control element (440) of a connecting device (400) of the respective injector (100).

14. Production line (600) for the manufacture of moulded parts made of plastic in a
number of moulds (F) with
a. at least one automatic foaming machine (601), and
b. at least one set-up station (610) for fastening (520) drive parts (300) to front parts (200) attached to at least one of the moulds (F) for forming injectors (100) according to one of claims 1 to 7 and / or for releasing (540) the drive parts (300) from the front parts (200),
**characterized by**
at least one motorized and / or automated, transport system (630) for transporting the moulds (F) between the automatic foaming machine (601) and the set-up station (610).

15. Production line (600) according to claim 14,
**characterized by**
at least one equipping station (620) for equipping (510) the moulds (F) with the front parts (200).

## Revendications

1. Injecteur (100) pour remplir un moule (F) de particules de plastique comprenant
a. une partie avant (200) avec une extrémité d'embouchure (201) pour la connexion au moule (F) et
b. une partie d'entraînement (300) pour une disposition à une extrémité de connexion (202) de la partie avant (200) opposée à l'extrémité d'embouchure (201) avec un piston (310) pouvant être inséré dans la partie avant (200) et un entraînement pour déplacer le piston (310) le long d'un axe longitudinal (LA) de la partie avant (200), et
c. un dispositif de connexion (400) pour fixer de manière amovible la partie d'entraînement (300) à la partie avant (200), la partie d'entraînement (300) étant montée sur la partie avant (200) de façon rotative autour de l'axe longitudinal (LA),
**caractérisé en ce que**
l'entraînement comprend une tige de piston (311) fixée au piston (310) de façon réglable le long de l'axe longitudinal (LA).

2. Injecteur (100) selon la revendication 1,
**caractérisé en ce que**
le dispositif de connexion (400) est fixé à la partie d'entraînement (300), de préférence par un raccord à vis.

3. Injecteur (100) selon la revendication 1 ou 2,
**caractérisé en ce que**
le dispositif de connexion (400) comprend un certain nombre de connecteurs (410) pour fixer le dispositif de connexion (400) à la partie d'entraînement (300) ou à la partie avant (200) dans un sens axial par rapport à l'axe longitudinal (LA), les connecteurs (410) étant de préférence conçus pour interagir positivement avec un certain nombre de connecteurs d'accouplement (420) sur la partie avant (200) ou la partie d'entraînement (300) contre un mouvement le long de l'axe longitudinal (LA),
a. les connecteurs (410) étant montés avec une préférence particulière sur le dispositif de connexion (400) de manière à pouvoir se déplacer radialement par rapport à l'axe longitudinal (LA), et / ou
b. les connecteurs d'accouplement (420) étant montés avec une préférence particulière sur la partie avant (200) ou la partie d'entraînement (300) de manière à pouvoir se déplacer radialement par rapport à l'axe longitudinal (LA).

4. Injecteur (100) selon la revendication 3,
**caractérisé en ce que**
le dispositif de connexion (400) comprend un élément de cadre (450) qui peut être déplacé, de préférence le long de l'axe longitudinal (LA), d'une position de fonctionnement à une position de montage, l'élément de cadre (450) fixant les connecteurs (410) et/ ou les connecteurs d'accouplement (420) dans une position de coopération positive dans la direction axiale dans la position de fonctionnement et permettant un mouvement radial par rapport à l'axe longitudinal (LA) des connecteurs (410) et / ou des connecteurs d'accouplement (420) dans la position de montage, un élément à ressort (430) tenant de préférence l'élément de cadre (450) dans la position de fonctionnement.

5. Injecteur (100) selon l'une des revendications 1 à 4,
**caractérisé en ce que**
le dispositif de connexion (400) comprend un élément de maniement (440), de préférence une poignée, pour libérer la fixation de la partie d'entraînement (300) sur la partie avant (200), de préférence en surmontant une force d'un élément à ressort (430), l'élément de maniement (440) étant de préférence attaché à l'injecteur (100).

6. Injecteur (100) selon l'une des revendications 1 à 5,
**caractérisé par**
un tube intérieur (330) pour une disposition dans la partie avant (100), le tube intérieur (330)
a. étant fixé de préférence à la partie d'entraînement (300), de manière particulièrement préférée au moyen d'une connexion à vis
b. ayant de préférence un chanfrein (332) à son extrémité tournée vers l'extrémité d'embouchure (201); et / ou
c. ayant de préférence une buse (331) à son extrémité tournée vers l'extrémité d'embouchure (201) avec des alésages (333) de buse inclinés vers l'axe longitudinal (LA) pour guider de l'air comprimé vers l'extrémité d'embouchure (201).

7. Injecteur (100) selon l'une des revendications 1 à 6,
**caractérisé en ce que**
l'entraînement comprend un piston d'entraînement fixé à l'extrémité de la tige de piston (311) opposée au piston (310), le piston d'entraînement étant agencé dans un cylindre pneumatique (350) de manière coulissante le long de l'axe longitudinal (LA).

8. Partie avant (200) pour un injecteur (100) selon l'une des revendications 1 à 7 pour remplir un moule (F) de particules de plastique avec une extrémité d'embouchure (201) pour relier la partie avant (200) au moule (F) et une extrémité de connexion (202) opposée à l'extrémité d'embouchure (201) pour connecter la partie avant (200) à une partie d'entraînement (300) de l'injecteur (100),
**caractérisée par**
un élément de réglage (220) pour régler une longueur de la partie avant (200) le long d'un axe longitudinal (LA) de la partie avant (200).

9. Partie avant (200) selon la revendication 8,
**caractérisée en ce que**
l'élément de réglage (220) comprend un adaptateur (221) qui est fixé de manière réglable le long de l'axe longitudinal (LA) à l'extrémité de connexion (202) pour connecter la partie avant (200) à la partie d'entraînement (300) et / ou à un dispositif de connexion (400), la partie avant (200) ayant de préférence un filetage sur lequel l'adaptateur (221) et / ou un écrou à anneau (222) est vissé pour fixer l'adaptateur (221).

10. Partie avant (200) selon la revendication 8 ou 9,
**caractérisée par** une aide au montage choisie parmi
a. un embout d'embouchure (210) disposé à l'extrémité d'embouchure (201), qui comprend un alésage (211), qui est de préférence coaxial à l'axe longitudinal (LA), qui est de forme complémentaire à une extrémité faisant face à l'extrémité d'embouchure (201) d'un tube intérieur (330) prévue pour être insérée dans la partie avant (200) et se rétrécit de préférence au moins en sections dans une direction d'insertion du tube intérieur (330) le long de l'axe longitudinal (LA), et
b. un moyen d'affichage pour afficher une terminaison affleurante d'un piston (310) inséré dans la partie avant (200) avec l'extrémité d'embouchure (201).

11. Procédé (500) pour produire des pièces moulées en plastique dans un certain nombre de moules (F) avec au moins les étapes suivantes :
a. Equiper (510) les moules (F) chacune d'un certain nombre de parties avant (200) d'injecteurs (100) selon l'une des revendications 1 à 7 pour remplir les moules (F) de particules de plastique et
b. Fixer (520) dans chaque cas une partie d'entraînement (300) au moins aux parties avant (200) fixée à un moule (F), dans chaque cas une partie d'entraînement (300) étant fixée à une partie avant (200) radialement et axialement par rapport à un axe longitudinal (LA) de la partie avant (200) et pouvant tourner autour de l'axe longitudinal (LA), et
c. Aligner (530) les parties d'entraînement (300) par rotation autour de l'axe longitudinal (LA) après l'étape de fixer (520) les parties d'entraînement (300).

12. Procédé (500) selon la revendication 11,
**caractérisé en ce que**
l'étape d'équiper (510) a lieu sur un plus grand nombre de moules (F) que l'étape de fixer (520), et le procédé (500) comprend de préférence une étape de desserrer (540) des parties d'entraînement (300) au moins des parties avant (200) fixées à un moule (F) et de manière particulièrement préférée une autre étape de fixer (520) des parties d'entraînement (300) libérées aux parties avant (200) fixées à un autre moule (F).

13. Procédé (500) selon la revendication 11 ou 12,
**caractérisé en ce que**
l'étape de fixer (520), l'autre étape de fixer (520) et / ou l'étape de desserrer (540) a lieu avec un élément de maniement (440) manuel d'un dispositif de connexion (400) de l'injecteur (100) respectif.

14. Installation de production (600) pour produire des pièces moulées en plastique dans un certain nombre de moules (F) avec
a. au moins une machine de moussage automatique (601) et
b. au moins une station de préparation (610) pour fixer (520) des parties d'entraînement (300) à des parties avant (200) fixées à au moins l'un des moules (F) pour former des injecteurs (100) selon l'une des revendications 1 à 7 et / ou pour desserrer (540) les parties d'entraînement (300) des parties avant (200)
**caractérisée par**
au moins un système de transport (630) motorisé et / ou automatisé pour transporter les moules (F) entre la machine de moussage (601) et la station de préparation (610).

15. Installation de production (600) selon la revendication 14,
**caractérisée par**
au moins une station d'équipement (620) pour équiper (510) les moules (F) avec les parties avant (200).
